# EUROPEAN PATENT APPLICATION

(11) **EP 4 209 569 A1**
(43) Date of publication of application: **12.07.2023**
(21) Application number: 21864011.8
(22) Date of filing: 30.07.2021
(51) Int. Cl.: C10C 1/16, C10C 3/02

(54) **METHOD FOR PRODUCING PITCH**

(30) Priority: 03.09.2020 JP 2020148261; 03.09.2020 JP 2020148306
(71) Applicant: Resonac Corporation, Tokyo 105-8518 (JP)
(72) Inventor: ISHIKAWA, Yutaro, Oita-shi, Oita 870-0189 (JP); NISHI, Nobuhiro, Oita-shi, Oita 870-0189 (JP); OTA, Keisuke, Oita-shi, Oita 870-0189 (JP)
(74) Representative: Strehl Schübel-Hopf & Partner
(86) International application number: PCT/JP2021/028474
(87) International publication number: WO 2022/049953

(57) **Abstract**

The present invention provides pitch for manufacturing carbon materials, the pitch having a high fixed carbon content and low viscosity and being obtained by using a petroleum-based heavy oil as a material. Pitch is produced by a method comprising: a step for preparing a material oil containing a petroleum-based heavy oil and an indene compound represented by general formula (1) (step 1); a step for thermally treating the material oil (step 2); and a step for distilling the thermally treated product and obtaining pitch as a high-boiling-point component (step 3). (In general formula (1), Ar represents an aromatic ring having 1 to 3 rings; R₁ to R₄ each independently represent a hydrogen atom, an alkyl group having 1 to 3 carbon atoms or an alkenyl group having 2 to 3 carbon atoms; R₅ represents an alkyl group having 1 to 3 carbon atoms or an alkenyl group having 2 to 3 carbon atoms; m represents an integer from 1 to 3; n represents an integer from 0 to 4 (when the number of rings of Ar is 1), an integer from 0 to 6 (when the number of rings of Ar is 2), or an integer from 0 to 8 (when the number of rings of Ar is 3); adjacent R₅s may be bonded together to form an alicyclic ring; and a hydrogen atom is bonded to Ar which is not substituted by R₅.)

## Description

### FIELD

The present invention relates to a method for producing a petroleum-based pitch for use in the production of carbon materials such as graphite electrodes.

### BACKGROUND

Carbon materials such as graphite electrodes are produced by kneading/molding aggregates such as coke and a binder pitch at a temperature equal to or higher than the softening point of the binder pitch, followed by calcining, and then graphitizing. Since it is necessary that the carbon material have properties such as high mechanical strength, high electrical conductivity, and high thermal conductivity, the carbon material preferably has high density and high strength. Conventionally, the calcined body has a structure having a large number of pores due to volatilization of low-molecular-weight components in the pitch during the calcining process, and thus, in the production process, impregnating the calcined body with an impregnating pitch followed by re-calcining several times reduces the porosity and makes the obtained carbon material have high density and high strength. Binder pitches and impregnating pitches are distinguished by the process used, but are generally collectively expressed as "pitch." In the present description, "binder pitches" and "impregnating pitches" are collectively referred to as "pitch" unless it is necessary that they be distinguished.

Heavy residue oil (ethylene bottom oil), which is a by-product when producing olefins such as ethylene and propylene by steam cracking or thermal cracking of petroleum hydrocarbons such as naphtha, is used only partially as a raw material for carbon black, and mostly as fuel. Converting this ethylene bottom oil into high value-added products is an object in the relevant technical field. In order to achieve this object, attempts have been made to produce a pitch and coke for carbon materials from ethylene bottom oil, taking advantage of the characteristics of ethylene bottom oil, which contains large amounts of aromatic compounds. However, due to performance problems, pitches for carbon materials, which are commonly used, are mainly coal tar pitches produced from coal tar, and petroleum-based pitches are not used except in special cases.

Some of the most important properties of binder pitch are fixed carbon content and viscosity. The higher the fixed carbon content, the higher the carbonization rate during calcining and graphitization, which is preferable because the density of the carbon material increases. The lower the viscosity, the higher the fluidity during kneading, and the better the kneadability with aggregates such as needle coke, which is preferable. In general, the fixed carbon content is improved by making the pitch heavier by thermal reforming, but at the same time, the viscosity is also increased. Thus, it is difficult to independently control the fixed carbon content and the viscosity by conventional methods.

As a method of lowering the viscosity of pitch, there is a method of lowering the softening point, but this method increases the amount of low molecular weight components in the pitch and reduces the fixed carbon content. As a method for solving this problem, JP 2016-204546 A (Patent Literature 1) proposes a method for producing a low-viscosity binder pitch without a reduction in fixed carbon content by increasing the content of quinoline insolubles in a soft pitch obtained from coal tar and lowering the softening point of the produced binder pitch. However, petroleum-based heavy oils do not contain quinoline insolubles (free carbon), or even if they do, the content thereof is less than the soft pitch obtained from coal tar, and thus, this method appears to have little effect when petroleum-based heavy oil is used as a raw material. JP S63-227693 A (Patent Literature 2) proposes a method of reducing viscosity while suppressing a decrease in fixed carbon content to some extent by adding a bicyclic to tetracyclic aromatic compound having a leaving group to a coal tar pitch. Though this method appears to be applicable to petroleum pitches, there is concern about a rapid increase in viscosity due to an accelerated polycondensation reaction during kneading at high temperatures, or puffing due to volatilization of leaving groups during calcining, and thus, this method is not preferable.

Some of the most important properties required for the impregnating pitch are quinoline insolubles (hereinafter referred to as "QI"), fixed carbon content, and viscosity. QI occlude pores during the impregnating step in which the fine pores of a calcined body are impregnated with the impregnating pitch, thereby blocking the impregnating pitch from impregnating the calcined body. Thus, it is desirable that the impregnating pitch substantially not include QI. Furthermore, the higher the fixed carbon content, the higher the carbonization rate at the time of calcining, which can reduce the generation of pores. Thus, the number of impregnation and re-calcining steps can be reduced, which is economically preferable. The lower the viscosity when the impregnating pitch is molten, the better the impregnating ability into the calcined body.

Conventionally, an impregnating pitch is produced by thermally reforming coal tar. However, since such an impregnating pitch originally contains QI which are fine amorphous carbon particles having a particle size of 1 µm or less (hereinafter referred to as "primary QI") in raw coal tar, and crystalline QI (hereinafter referred to as "secondary QI") are generated at around 350 to 400°C during thermal reforming, a process for removing or reducing these QI is required for use as an impregnating pitch. Various methods for removing or reducing QI are known. JP S61-21188 A (Patent Literature 3) discloses a method for producing an impregnating pitch, wherein toluene or kerosene is added to coal tar or a coal tar pitch, QI are removed by centrifugation, light oil is removed from the resulting centrifuged liquid, or light oil is removed while thermally reforming at 290°C to 360°C. JP 2004-285130 A (Patent Literature 4) discloses a method for producing an impregnating pitch free of QI, wherein a coal tar pitch having a QI amount of 0.1 to 5% by mass or less is heat-treated, the heat-treated coal tar pitch is extracted with coal tar middle oil and filtered, and the resulting filtrate is distilled to separate and remove the coal tar middle oil.

Unlike coal tar, petroleum-based heavy oil does not substantially contain primary QI, and thus, by thermally reforming under conditions which do not generate secondary QI, a pitch which does not substantially contain QI can be obtained without a QI removal process. For example, JP S52-81321 A (Patent Literature 5) describes that the QI amount of the pitch obtained by thermally reforming petroleum-based heavy oil (Middle East vacuum residue oil) at 420°C is 0.0% by mass. Thus, when a petroleum-based pitch produced by thermally reforming petroleum-based heavy oil under conditions which do not generate secondary QI is used as an impregnating pitch, since a QI removal process is not necessary, it is economically advantageous in producing an impregnating pitch, but a petroleum-based pitch is generally known to have a lower fixed carbon content than a coal tar pitch. As a method of improving the fixed carbon content of a petroleum-based pitch, there is a method of making it heavier by thermal reforming. However, this method has a problem in that the impregnating ability of the impregnating pitch is reduced due to the high viscosity and softening point.

### [CITATION LIST]

### [PATENT LITERATURE]

[PTL 1] JP 2016-204546 A
[PTL 2] JP S63-227693 A
[PTL 3] JP S61-21188 A
[PTL 4] JP 2004-285130 A
[PTL 5] JP S52-81321 A

### SUMMARY

### [TECHNICAL PROBLEM]

The present invention provides a high-performance pitch from a petroleum-based heavy oil as a raw material. Specifically, there is provided a binder pitch having a high fixed carbon content and a low viscosity for producing carbon materials and an impregnating pitch having a high fixed carbon content and a low viscosity and being free of QI for producing carbon materials.

### [SOLUTION TO PROBLEM]

The present inventors have discovered, as a result of rigorous investigation in order to obtain an excellent pitch for producing carbon materials from petroleum-based heavy oil, that a pitch having a high fixed carbon content and a low viscosity and being free of QI can be obtained by mixing an indene compound with the raw material petroleum-based heavy oil, heat-treating, and distilling, and have completed the present invention.

Specifically, the present invention relates to [1] to [14] below.
[1] A method for producing a pitch, comprising the steps of preparing a raw material oil containing a petroleum-based heavy oil and an indene compound represented by general formula (1) (step 1), heat-treating the raw material oil (step 2), and distilling the heat-treated product to obtain a pitch as a high boiling point component (step 3) 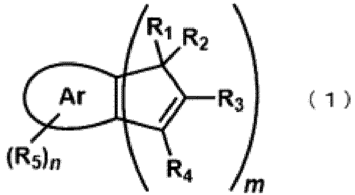 wherein Ar is an aromatic ring having 1 to 3 rings, R₁ to R₄ are each independently a hydrogen atom, a C₁₋₃ alkyl group, or a C₂₋₃ alkenyl group, each R₅ is a C₁₋₃ alkyl group or a C₂₋₃ alkenyl group, m represents an integer of 1 to 3, n represents an integer of 0 to 4 (when a ring number of Ar is 1), an integer of 0 to 6 (when the ring number of Ar is 2), or an integer of 0 to 8 (when the ring number of Ar is 3), adjacent R₅ may be bonded together to form an alicyclic ring, and a hydrogen atom is bonded where Ar is not substituted with R₅.
[2] The method for producing a pitch according to [1], wherein a concentration of the indene compound in the raw material oil is 10% by mass to 60% by mass.
[3] The method for producing a pitch according to [1] or [2], wherein the petroleum-based heavy oil is an ethylene bottom oil heavy fraction.
[4] The method for producing a pitch according to any one of [1] to [3], wherein at least a part of the indene compound is derived from at least one of cracked kerosene and an ethylene bottom oil light fraction.
[5] The method for producing a pitch according to any one of [1] to [4], wherein Ar in general formula (1) comprises at least one selected from the group consisting of a benzene ring, a naphthalene ring, an anthracene ring, and a phenanthrene ring.
[6] The method for producing a pitch according to any one of [1] to [5], wherein the ring number of Ar in general formula (1) is 1, R₁ to R₄ are each independently a hydrogen atom or a methyl group, m is 1, and n is 0.
[7] The method for producing a pitch according to any one of [1] to [6], wherein the indene compound contains at least one selected from the group consisting of indene, methylindene, and dimethylindene.
[8] The method for producing a pitch according to any one of [1] to [7], wherein a heat-treatment temperature is 360°C to 450°C, and a heat-treatment time is 0.5 to 48 hours.
[9] The method for producing a pitch according to any one of [1] to [8], further comprising the steps of adding the indene compound again to the pitch obtained in step 3 to prepare a second raw material oil (step 4), heat-treating the second raw material oil (step 5), and distilling the heat-treated product to obtain a pitch as a high boiling point component (step 6).
[10] The method for producing a pitch according to [9], wherein in step 5, a heat-treatment temperature is 360°C to 450°C, and a heat-treatment time is 0.5 to 48 hours.
[11] The method for producing a pitch according to any one of [1] to [10], comprising no step of removing quinoline insolubles.
[12] A method for producing a carbon material, wherein the pitch obtained by the production method according to any one of [1] to [10] is used as a binder pitch.
[13] A method for producing a carbon material, wherein the pitch obtained by the production method according to any one of [1] to [11] is used as an impregnating pitch.
[14] The method for producing a carbon material according to [12] or [13], wherein the carbon material is a graphite electrode.

### [ADVANTAGEOUS EFFECTS OF INVENTION]

According to the present invention, a binder pitch having a high fixed carbon content and a low viscosity can be obtained by a simple method from a raw material oil containing petroleum-based heavy oil as a primary component and an indene compound. Furthermore, according to the present invention, an impregnating pitch which does not contain QI, has a high fixed carbon content, and has a low viscosity can be obtained. In particular, when an ethylene bottom oil heavy fraction is used as the petroleum-based heavy oil and cracked kerosene and/or an ethylene bottom oil light fraction are used as raw materials for the indene compound, since the ethylene bottom oil heavy fraction, cracked kerosene, and ethylene bottom oil light fraction are all products which are obtained in common petrochemical industry processes, securing raw materials is extremely easy.

### BRIEF DESCRIPTION OF DRAWINGS

FIG. 1 is a flow chart showing a petrochemical process for thermal cracking of naphtha, and a method for producing ethylene bottom oil and cracked kerosene.
FIG. 2 is a graph showing the relationship between the softening point and fixed carbon content of pitch.
FIG. 3A is a graph showing the relationship between the softening point and viscosity of pitch at 160°C.
FIG. 3B is a graph showing the relationship between the softening point and viscosity of pitch at 180°C.
FIG. 3C is a graph showing the relationship between the softening point and viscosity of pitch at 200°C.
FIG. 3D is a graph showing the relationship between the softening point and viscosity of pitch at 220°C.

### DESCRIPTION OF EMBODIMENTS

Preferred embodiments of the present invention will be described below, but the present invention is not limited to only these aspects, and it should be understood that various applications are possible within the spirit and scope thereof.

### <Method for Production of Pitch>

The method for producing a pitch according to an embodiment comprises at least the following steps 1 to 3 in this order, and preferably does not include a step of removing QI. Furthermore, steps 4 to 6, in which indene is added again to the pitch obtained in step 3, and heat-treatment and distillation are carried out, may be added.
Step 1: preparing a raw material oil containing a petroleum-based heavy oil and an indene compound;
Step 2: heat-treating the raw material oil prepared in step 1;
Step 3: distilling the heat-treated product obtained in step 2 to obtain a pitch as a high boiling point component;
Step 4: adding an indene compound to the pitch obtained in step 3 to prepare a second raw material oil;
Step 5: heat-treating the second raw material oil prepared in step 4; and
Step 6: distilling the heat-treated product obtained in step 5 to obtain a pitch as a high boiling point component.

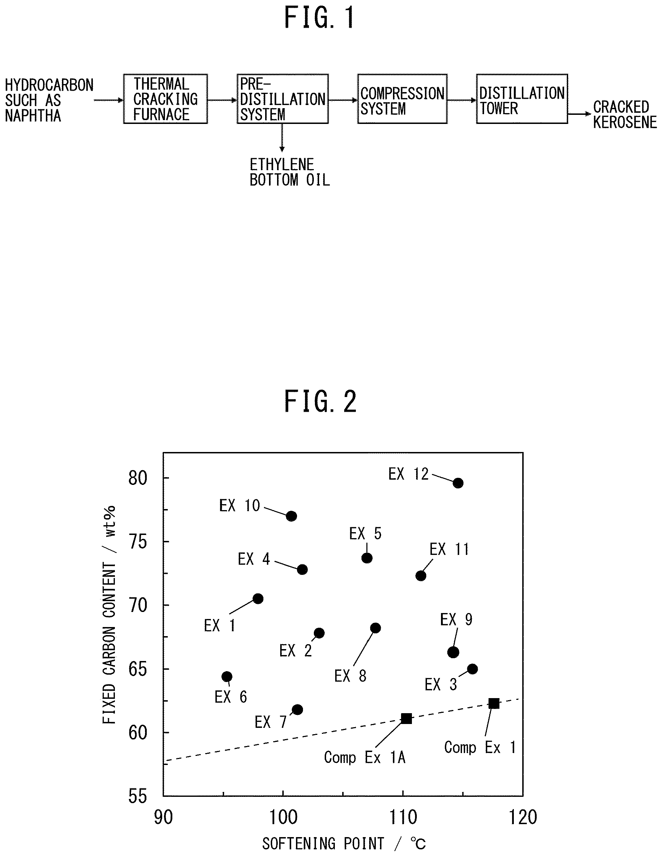

Generally, in the petrochemical industry, naphtha or the like is thermally cracked at a high temperature, the resulting thermal decomposition product is distilled and separated into fractions such as ethylene and propylene, other olefins, aromatic compounds such as benzene, toluene, and xylene, cracked gasoline, and cracked kerosene as products. Among these fractions, the heavy fraction with the highest boiling point is referred to as ethylene bottom oil, which is used as a raw material for carbon black and as a fuel (refer to FIG. 1). Since thermal cracking plants for naphtha or the like are often referred to as ethylene plants, the heavy fraction described above is referred to as ethylene bottom oil.

Although the properties of ethylene bottom oil obtained by thermal cracking of naphtha-containing raw materials depend on the type of naphtha-containing raw material, thermal cracking conditions, operating conditions of the refining distillation tower, etc., the general properties are that the 50% distillation temperature is 200°C to 400°C, the aromatic carbon content is 50% by mass or more, the flash point is 70°C to 100°C, and the 50°C kinematic viscosity is less than 40 mm²/s. However, since ethylene bottom oil is a mixture of hydrocarbon compounds, the above values may vary slightly.

The petroleum-based heavy oil may be ethylene bottom oil, an ethylene bottom oil heavy fraction obtained by removing an arbitrary ratio (for example, 5 to 70% by mass) of light components from ethylene bottom oil by distillation, other petroleum-based heavy oil such as heavy oil produced during catalytic cracking of petroleum, or a mixture thereof. In an embodiment, the petroleum-based heavy oil is an ethylene bottom oil heavy fraction. Furthermore, though a heavy oil such as coal tar may be added to the petroleum-based heavy oil, if the primary QI content is high and depending on the intended use of the obtained pitch, a separate QI removal step may sometimes be required. Examples of other petroleum-based heavy oils include, but are not limited to, fluid catalytic cracking oil (FCC decant oil), normal pressure distillation residue oil, and vacuum distillation residue oil. The sulfur content and nitrogen content of the pitch are preferably as small as possible because they cause puffing during calcining. When a graphite electrode is produced using a pitch containing a large amount of metal components, these metal components evaporate during graphitization, reducing the density of the graphite electrode, which may be undesirable in terms of product quality. From these points of view, the petroleum-based heavy oil preferably contains little sulfur, nitrogen, and metal components, and is preferably fluid catalytic cracking oil (FCC decant oil). Though the properties of fluid catalytic cracking oil (FCC decant oil) depend on the raw materials and operating conditions, the general properties are that the 50% distillation temperature is 300 to 450°C, the flash point is 60 to 160°C, and the 40°C kinematic viscosity is less than 40 mm²/s. However, since fluid catalytic cracking oil (FCC decant oil) is a complex mixture, the above values may vary slightly.

### (Step 1)

Step 1 is a step of mixing a petroleum-based heavy oil and an indene compound to prepare a raw material oil. The indene compound to be mixed is a compound represented by general formula (1). In general formula (1), Ar is an aromatic ring having 1 to 3 rings, R₁ to R₄ are each independently a hydrogen atom, a C₁₋₃ alkyl group, or a C₂₋₃ alkenyl group, each R₅ is a C₁₋₃ alkyl group or a C₂₋₃ alkenyl group, m represents an integer of 1 to 3, n represents an integer of 0 to 4 (when a ring number of Ar is 1), an integer of 0 to 6 (when the ring number of Ar is 2), or an integer of 0 to 8 (when the ring number of Ar is 3), adjacent R₅ may be bonded together to form an alicyclic ring, and a hydrogen atom is bonded where Ar is not substituted with R₅.

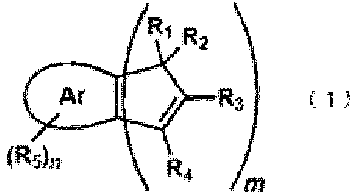

Examples of aromatic rings and condensed aromatic rings having 1 to 3 rings include a benzene ring (1 ring), a naphthalene ring (2 rings), an anthracene ring (3 rings), and a phenanthrene ring (3 rings). Among these, from the viewpoint of a high content in cracked kerosene and an ethylene bottom oil light fraction, Ar is preferably a benzene ring.

The plurality of R₁ to R₄ may be the same or different. Examples of C₁₋₃ alkyl groups include a methyl group, an ethyl group, a normal propyl group, and an isopropyl group. Examples of C₂₋₃ alkenyl groups include a vinyl group and an allyl group. Among these, from the viewpoint of a high content in cracked kerosene and an ethylene bottom oil light fraction, a hydrogen atom, a methyl group, and an ethyl group are preferable, a hydrogen atom and a methyl group are more preferable, and a hydrogen atom is most preferable. Each R₅ represents a C₁₋₃ alkyl group or a C₂₋₃ alkenyl group. Examples of C₁₋₃ alkyl groups include a methyl group, an ethyl group, a normal propyl group, and an isopropyl group. Examples of C₂₋₃ alkenyl groups include a vinyl group and an allyl group. n represents an integer of 0 to 4 when the number of rings of Ar is 1, an integer of 0 to 6 when the number of rings is 2, and an integer of 0 to 8 when the number of rings is 3. When n is an integer of 2 to 8, the plurality of R₅ may be the same or different. Among these, from the viewpoint of a high content in cracked kerosene and an ethylene bottom oil light fraction, it is preferable that each R₅ be a methyl group or an ethyl group when n is an integer of 1 or more, and more preferably n is an integer of 0. Adjacent R₅ may be bonded together to form an alicyclic ring. m represents an integer from 1 to 3. m is preferably 1.

Examples of the indene compound are shown below, but the indene compound is not limited to these.

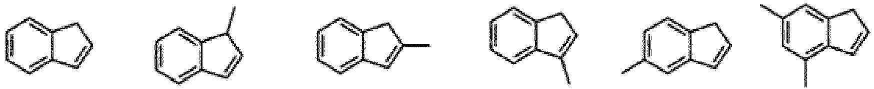

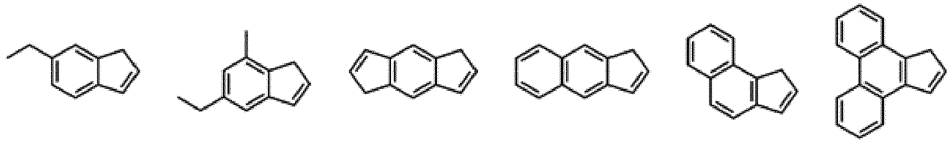

The indene compound preferably contains at least one selected from the group consisting of indene, methylindene, and dimethylindene, it is more preferable that in general formula (1), the ring number of Ar be 1, R₁ to R₄ each independently be a hydrogen atom or a methyl group, m be 1, and n be 0, and it is further preferable that in general formula (1), the ring number of Ar be 1, R₁ to R₄ be each a hydrogen atom, m be 1, and n be 0, i.e., indene. Methylindene of general formula (1), wherein the ring number of Ar is 1, any one of R₁ to R₄ is a methyl group, the other three are hydrogen atoms, m is 1, and n is 0, is also preferable. As the methylindene, 1-methylindene and 2-methylindene are preferable.

The concentration of the indene compound (when a plurality of types are included, the total amount thereof) in the raw material oil is preferably in the range of 10% by mass to 60% by mass, relative to the entirety of the raw material oil, and further preferably in the range of 20% by mass to 50% by mass. When the raw material oil contains a mixture of an indene compound and a compound other than the indene compound in addition to the petroleum-based heavy oil, the ratio of the indene compound to the entirety of the raw material oil is adjusted to fall within the above range. As the concentration of the indene compound in the raw material oil increases, the resulting pitch has a higher fixed carbon content and a lower viscosity, but the amount of inexpensive petroleum-based heavy oil decreases, which is economically disadvantageous.

As the indene compound, the compounds represented by general formula (1) can be used alone or as a mixture of two or more thereof. A mixture of the indene compound and a compound other than the indene compound can also be added to the raw material oil. The compound other than the indene compound in the mixture of the indene compound and the compound other than the indene compound is preferably a hydrocarbon. Specific examples of mixtures of such an indene compound and a compound other than the indene compound include cracked kerosene and an ethylene bottom oil light fraction.

Cracked kerosene is a mixture composed mainly of hydrocarbons having 9 or more carbon atoms and manufactured in petrochemical industrial processes, and is a fraction having a boiling point in the range of 90°C to 230°C at 1 atm. However, since cracked kerosene is a mixture of hydrocarbon compounds, the number of carbon atoms and boiling point may vary slightly.

Examples of primary components of cracked kerosene include xylene, styrene, allylbenzene, propylbenzene, methylethylbenzene, trimethylbenzene, methylstyrene, dicyclopentadiene, indane, indene, methylpropylbenzene, methylpropenylbenzene, ethylstyrene, divinylbenzene, methylindene, naphthalene, and methyldicyclopentadiene.

As described above, cracked kerosene generally contains styrene or a derivative thereof, and dicyclopentadiene or a derivative thereof in addition to the indene compound. Since the styrene and derivatives thereof and dicyclopentadiene and derivatives thereof cause sludge generation during pitch production or increase the softening point and viscosity of the pitch, it is more effective to increase the concentration of the indene compound in the cracked kerosene by distillation to reduce the concentration of styrene and derivatives thereof and dicyclopentadiene and derivatives thereof.

"Ethylene bottom oil light fraction" refers to the fraction of ethylene bottom oil having a boiling point in the range of 180°C to 260°C at 1 atm. However, since the ethylene bottom oil light fraction is a mixture of hydrocarbon compounds, the boiling point thereof may vary somewhat.

Examples of primary components of the ethylene bottom oil light fraction include naphthalene, methylnaphthalene, biphenyl, indene, methylindene, and divinylbenzene.

Though the ethylene bottom oil light fraction can be used without any treatments, it is more effective to increase the concentration of the indene compound in the ethylene bottom oil light fraction by distillation.

### (Step 1)

In step 1, it is preferable that the petroleum-based heavy oil and the indene compound be mixed to prepare a raw material oil in which both components are uniformly mixed. The mixing method is not particularly limited, but if the petroleum-based heavy oil is solid at room temperature or is difficult to mix at room temperature for reasons such as high viscosity, it may be appropriately heated and mixed in a molten state. However, when mixing under normal pressure, the indene compound volatilizes if heated at a temperature exceeding the boiling point of the indene compound, so it is necessary to heat at a temperature equal to or lower than the boiling point of the indene compound. When heating at a temperature equal to or higher than the boiling point of the indene compound, the mixture should be mixed under pressure using a closed container.

### (Step 2)

Step 2 is a step in which the raw material oil prepared in step 1 is heat-treated. The heat-treatment is preferably executed in a gas atmosphere of nitrogen gas; carbon dioxide gas; a mixed gas consisting of hydrogen gas and a lower alkane such as methane or ethane; or a mixed gas of nitrogen gas, hydrogen gas and the lower alkane, in a closed container.

The heat-treatment temperature is preferably 360°C to 450°C, more preferably 370°C to 430°C, and further preferably 380°C to 400°C. The rate of temperature increase is not limited, but if the surface temperature of the inner wall of the closed container is significantly higher than the internal temperature of the raw material oil, excessive heat-treatment will undesirably cause coking on the inner wall of the closed container.

The heat-treatment time is preferably 0.5 hours to 48 hours, and more preferably 4 hours to 36 hours, from the time when the predetermined heat-treatment temperature is reached.

The pressure (initial pressure) at the start of heat-treatment is preferably 0 MPaG, but is not particularly limited. The pressure in the closed container rises due to hydrogen gas and lower alkanes such as methane and ethane generated by thermal decomposition during heat-treatment. Though the pressure inside the closed container is not limit, it is possible to depressurize if necessary.

### (Step 3)

Step 3 is a step in which the heat-treated product obtained in step 2 is distilled to obtain a pitch as a high boiling point component. The distilling method, which includes removing low boiling point components from the heat-treated product obtained in the heat-treatment step by distillation to produce a pitch having a desired softening point and a fixed carbon content may be any of and can be appropriately selected from ambient pressure distillation, reduced pressure distillation (vacuum distillation), or a combination of ambient pressure distillation and reduced pressure distillation. The internal temperature of a distillation still preferably does not exceed 360°C. If the temperature exceeds 360°C, reactions such as polymerization occur, and coking occurs on the inner wall of the distillation still, which is not preferable. The lower limit temperature does not affect the properties of the pitch, but is preferably 200°C or higher in view of economy, since if the temperature is low, the distillation pressure must be reduced in order to distill off low boiling point components. When performing reduced pressure distillation (vacuum distillation), the pressure during distillation is preferably 100 to 10,000 PaA, more preferably 500 to 3,000 PaA, and further preferably 800 to 2,000 PaA in order to obtain a pitch having a softening point of 70 to 130°C. The softening point of the pitch can be controlled by the amount of low boiling point components removed. In general, the softening point increases as the amount of low boiling point components removed increases. In order to set the softening point of the pitch to 70°C to 130°C, the amount of low boiling point components removed is preferably 20% by mass to 80% by mass, and more preferably 30% by mass to 70% by mass of the heat-treated product, although it depends on the composition of the heat-treated product.

Various methods of removing or reducing QI have been reported. Among them, a method in which an appropriate viscosity modifier is added to the obtained pitch, QI are removed or reduced by centrifugation or extraction and filtration, and the viscosity modifier is removed from the obtained centrifugal liquid or filtrate by an operation such as distillation appears to be effective. However, the pitch obtained after distillation in step 3 above has a QI amount of approximately 0.0%, and these QI removal or reduction steps are unnecessary.

Steps 4 to 6, which are optionally additional steps, will be described below. Detailed descriptions of operations which are identical to those of steps 1 to 3 will be omitted.

### (Step 4)

Step 4 is a step in which the indene compound is again added to the pitch obtained in step 3 to prepare a second raw material oil. The indene compound to be mixed is the same as that used in step 1, and the amount of the indene compound in the second raw material oil (when a plurality of types are included, the total amount thereof) is also preferably in the range of 10% by mass to 60% by mass relative to the entirety of the second raw material oil, in the same manner as step 1. When a mixture of an indene compound and a compound other than the indene compound is added to the pitch to form the second raw material oil, the ratio of the indene compound to the entirety of the second raw material oil is adjusted to fall within the above range. In step 4, the pitch obtained in step 3 and the indene compound are preferably mixed to prepare a second raw material oil in which both components are uniformly mixed. Though the mixing method is not particularly limited, the same method as in step 1 is preferable.

### (Step 5)

Step 5 is a step in which the second raw material oil prepared in step 4 is heat-treated. The reaction conditions such as the reaction atmosphere, heat-treatment temperature, heat-treatment time, and reaction pressure are preferably the same as in step 2.

### (Step 6)

Step 6 is a step in which the heat-treated product obtained in step 5 is distilled to obtain a pitch as a high boiling point component. The distillation method can be appropriately selected from various methods depending on the situation, but the same method as in step 3 is preferable. Though various QI removal or reduction methods have been reported as described above, the pitch obtained after the distillation in step 6 has a QI amount of approximately 0.0%, and these QI removal or reduction steps are unnecessary.

The pitch obtained by the production method according to an embodiment can be used for the production of various carbon materials (including carbon/carbon composite materials). Examples of specific carbon materials include a graphite electrode, and the pitch described above can be used as a binder pitch or impregnating pitch during the production of the graphite electrode.

### <Graphite Electrode Production Steps>

An example of the graphite electrode production steps is described below.

### 1. Kneading Step

A step in which needle coke and a binder pitch are mixed and kneaded together

### 2. Molding Step

A step in which the kneaded material is molded by extrusion to obtain a cylindrical molded body

### 3. Calcining Step

A step in which the molded body is calcined to obtain a calcined body

### 4. Impregnation Step

A step in which the calcined body is filled with an impregnating pitch

### 5. Re-calcining Step

A step in which the filled calcined body is re-calcined to obtain a re-calcined body

### 6. Graphitization Step

A step in which the re-calcined body is graphitized

### 7. Processing Step

A step in which the graphitized body is formed into a predetermined shape by cutting for use as a graphite electrode

### 1. Kneading Step

The needle coke and the binder pitch, which are pulverized, classified, and mixed in terms of particle size at a predetermined ratio, are kneaded together and mixed. The content of the binder pitch is generally approximately 20 to 30 parts by mass per 100 parts by mass of the needle coke. The binder pitch is not particularly limited as long as it forms a paste when mixed with the needle coke. For example, a petroleum pitch or coal tar pitch can be used.

The kneaded material may contain iron oxide. Iron oxide has an effect of suppressing puffing.

A commercially available mixer or stirrer can be used for mixing and kneading. Specific examples thereof include mixers and kneaders. A preferable kneading temperature is approximately 150°C, and the mixture is then cooled to a temperature suitable for molding (100 to 130°C).

### 2. Molding step

The kneaded material is molded by extrusion to obtain a cylindrical molded body of a predetermined size.

### 3. Calcining Step

The molded body of the previous step is heated and calcined at 700°C to 1,000°C to obtain a calcined body. The calcining step is preferably performed in a non-oxidizing atmosphere of combustion exhaust gas. The molded body softens at the initial stage of temperature rise, and at 200 to 500°C, thermal decomposition and polycondensation of the binder pitch generate a large amount of decomposed gas, causing pore formation and volumetric shrinkage. The binder pitch is carbonized at 500 to 600°C. The calcining step, including cooling, often takes approximately one month.

### 4. Impregnation Step

In the calcining step, generally 35 to 45% of the binder pitch mass is lost as volatile matter. At that time, a large number of pores are generated in the calcined body. In the impregnation step, the pores are filled with an impregnating pitch. The impregnation is performed, for example, by placing the calcined body in an autoclave, degassing it under reduced pressure, injecting the molten impregnating pitch, and introducing the impregnating pitch into the pores at approximately 200°C under a gas pressure of approximately 1 MPa.

### 5. Re-calcining Step

The filled calcined body is calcined again to obtain a re-calcined body. Re-calcining can also be performed under the same conditions as in the calcining step. The impregnation step and the re-calcining step may be repeated as necessary.

### 6. Graphitization Step

The re-calcined body is placed in a furnace (Acheson furnace or LWG furnace) surrounded by an insulating material, and the re-calcined body is subjected again to heat-treatment by the resistive heat generation of packed coke or the re-calcined body by energization. The graphitization temperature is 2,000 to 3,000°C. This temperature is necessary to convert the amorphous carbon in the re-calcined body to crystalline graphite. Heat-treatment for several days is preferable in order to convert the re-calcined body to graphite.

### 7. Processing Step

The graphitized body is processed into a graphite electrode product with a predetermined shape by machining such as cutting.

The pitch produced by the production method according to an embodiment can suitably be used as the binder pitch used in the kneading step.

The pitch produced by the production method according to an embodiment can suitably be used as the impregnating pitch used in the impregnation step.

### EXAMPLES

The present invention will be further described with reference to the Examples and Comparative Examples below, but these Examples merely illustrate examples of the present invention, and the present invention is not limited to these Examples.

### <Softening Point (SP) Measurement Method>

Measurement was performed in accordance with JIS K 2425:2006 "8. Measuring method for softening point of tar pitch (ring and ball method)" of the "Test methods of creosote oil, prepared tar and tar pitch."

### <Fixed Carbon (FC) Content Measurement Method>

Measurement was performed based on JIS K 2425:2006 "11. Method of determination of fixed carbon content" of the "Test methods of creosote oil, prepared tar and tar pitch" with modifications. A 1-g sample was placed in a porcelain drop-lid crucible, which was then placed in a porcelain B-type crucible, coke grains were also compacted around and on top, and the outer crucible lid was placed over the crucible. This was then placed in an electric furnace at room temperature and heated in accordance with a temperature rising program from room temperature to 200°C (10°C/min), 200 to 560°C (1°C/min), and 560 to 800°C (10°C/min), and was then heated at 800°C for 30 minutes. After cooling, the fixed carbon content was calculated in accordance with JIS K 2425:2006 "11. Method of determination of fixed carbon content" of the "Test methods of creosote oil, prepared tar and tar pitch." In the method described in JIS K 2425:2006 "11. Method of determination of fixed carbon content" of the "Test methods of creosote oil, prepared tar and tar pitch", after heating at 430°C for 30 minutes or more, heating is performed at 800°C for 30 minutes, whereas in actual electrode production, the temperature is raised from room temperature to about 700°C to 1,000°C over several weeks for calcining, whereby the temperature rising pattern in this method can be said to be closer to actual production conditions.

### <Viscosity Measurement Method>

Viscosity at 160°C, 180°C, 200°C, and 220°C was measured in accordance with ASTM D5018-18 "Standard Test Method for Shear Viscosity of Coal-Tar and Petroleum Pitches."

### <Calculation Method of Indene Compound Concentration>

The indene compound concentrations of Examples 1 to 5, 8, 9 and 11 were calculated from the mass of the indene compound and the ethylene bottom oil heavy fraction used. The indene compound concentrations of Examples 6 and 7 were estimated by the area normalization method using GC-MS. The GC-MS apparatus used was a 5975C spectrometer manufactured by Agilent Technologies, Inc., and the column used was a TC-WAX manufactured by GL Sciences Inc.

### <Ethylene Bottom Oil Heavy Fraction and Light Fraction>

Using 894 kg of ethylene bottom oil as a raw material, distillation refinement was performed at a still temperature of 101°C and an operating pressure of 533 to 1,067 PaA using distillation equipment having a theoretical plate number of 15 (Sulzer packing) to obtain 544 kg of an ethylene bottom oil heavy fraction as a bottom liquid. The initial boiling point of the ethylene bottom oil heavy fraction was 218°C. The components obtained as distillate were used as the ethylene bottom oil light fraction.

### <Quinoline Insolubles (QI) Measurement Method>

Measurement was performed in accordance with the filtration method described in JIS K 2425:2006 "15. Method of determination of quinoline-insoluble content in tar pitch" of the "Test methods of creosote oil, prepared tar and tar pitch."

### (Example 1)

A raw material oil composed of 250 g of the ethylene bottom oil heavy fraction and 250 g of indene (manufactured by FUJIFILM Wako Pure Chemical Corporation) was charged into an SUS autoclave having a capacity of 1.0 L. The container was sealed under a nitrogen gas atmosphere, and the interior of the container was heated to 380°C at a rate of 4°C/min while stirring. After 4 hours had elapsed since the start of temperature rise, the product was allowed to cool to room temperature, and the heat-treated product therein was discharged. The heat-treated product was subjected to reduced pressure distillation at a pressure of 933 PaA and a liquid temperature of 245°C in the distillation still using a reduced pressure distiller to distill off the low boiling point components, whereby 280 g (percent yield 56%) of pitch was obtained as a high boiling point component.

### (Examples 2 to 5)

Pitches were obtained by the method described in Example 1 except that the raw material oil compositions and heat-treatment conditions were changed as described in Table 1.

### (Example 6)

Cracked kerosene was distilled under reduced pressure in two stages to obtain a fraction enriched with the indene compound (hereinafter referred to as "fraction a"). The indene compound concentration in fraction a was 52% by mass. Production was performed in accordance with the method described in Example 1 using 250 g of fraction a in place of indene to obtain 255 g of pitch (percent yield 51%).

### (Example 7)

Using a raw material oil composed of 250 g of the ethylene bottom oil heavy fraction and 250 g of the ethylene bottom oil light fraction in place of indene, production was performed in accordance with the method described in Example 1 to obtain 195 g of pitch (percent yield 39%). The indene compound concentration in the ethylene bottom oil light fraction was 20% by mass.

### (Example 8)

A pitch was obtained in accordance with the method described in Example 1 except that 250 g of 1-methylindene (manufactured by Tokyo Chemical Industry Co., Ltd.) in place of the indene of Example 1.

### (Example 9)

A pitch was obtained in accordance with the method described in Example 1 except that 250 g of 2-methylindene (manufactured by Tokyo Chemical Industry Co., Ltd.) in place of the indene of Example 1.

### (Example 10)

A second raw material oil composed of 250 g of the pitch prepared by the method described in Example 1 and 250 g of indene (manufactured by FUJIFILM Wako Pure Chemical Corporation) was charged into an SUS autoclave having a capacity of 1.0 L. The container was sealed under a nitrogen gas atmosphere, and the interior of the container was heated to 380°C at a rate of 4°C/min while stirring. After 4 hours had elapsed since the start of temperature rise, the product was allowed to cool to room temperature, and the heat-treated product therein was discharged. The heat-treated product was subjected to reduced pressure distillation at a pressure of 933 PaA and a liquid temperature of 245°C in the distillation still using a reduced pressure distiller to distill off the low boiling point components, whereby 360 g (percent yield 72%) of pitch was obtained as a high boiling point component.

### (Example 11)

A pitch was obtained in accordance with the method described in Example 1, except that the distillation conditions were changed as described in Table 1.

### (Example 12)

A pitch was obtained in accordance with the method described in Example 10, except that the distillation conditions were changed as described in Table 1.

### (Comparative Example 1)

Using 500 g of the ethylene bottom oil heavy fraction as a raw material oil, 305 g of pitch (percent yield 61%) was obtained in accordance with the method described in Example 1.

### (Comparative Example 1A)

The distillation conditions of Comparative Example 1 were changed to a pressure of 933 PaA and a liquid temperature of 230°C in the distillation still, so that the pitch softening point was changed. The yield of pitch was 325 g (percent yield 65%).

### (Comparative Example 2)

Production was performed in accordance with the method described in Example 1 using 250 g of styrene (manufactured by Tokyo Chemical Industry Co., Ltd.) in place of 250 g of indene. After heat-treatment, when the heat-treated product was discharged, it was found that a large amount of sludge was generated, and no pitch was obtained.

### (Comparative Example 3)

Production was performed in accordance with the method described in Example 1 using 250 g of dicyclopentadiene (manufactured by Tokyo Chemical Industry Co., Ltd.) in place of indene to obtain 385 g of pitch (percent yield 77%).

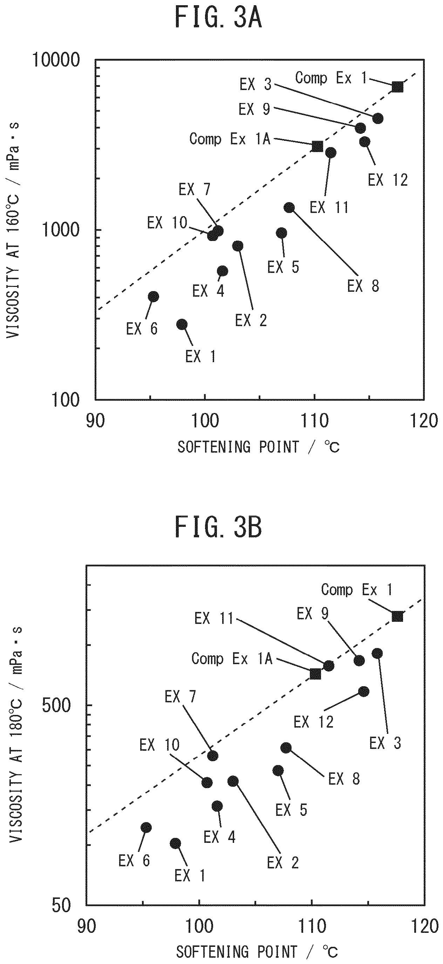

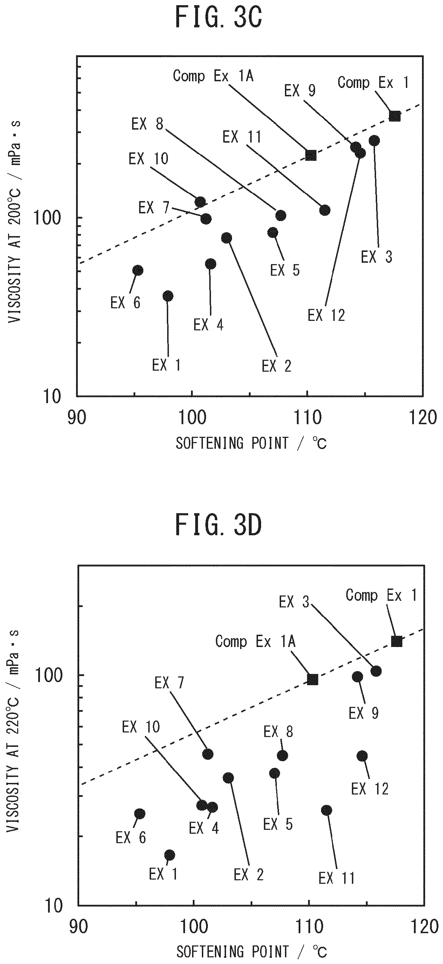

The results of the Examples and Comparative Examples are shown in Table 1 and FIGS. 2 and 3A to 3D. FIG. 2 is a graph showing the relationship between the softening point and the fixed carbon content of pitch. Comparative Example 1A in the drawing has the same raw materials and heat-treatment conditions as Comparative Example 1, but the softening point is changed by changing the reduced pressure distillation conditions. In this case, it is known that there is a linear relationship between the softening point and the fixed carbon content of the pitch (refer to JP H09-104872 A). FIGS. 3A to 3D are graphs showing the relationship between the softening point and the viscosity at 160°C (FIG. 3A), 180°C (FIG. 3B), 200°C (FIG. 3C) and 220°C (FIG. 3D). Comparative Example 1A in the drawing has the same raw materials and heat-treatment conditions as Comparative Example 1, but the softening point is changed by changing the reduced pressure distillation conditions. In this case, it is known that there is a linear relationship between the pitch softening point and the logarithm of the viscosity at each temperature (refer to JP 2007-327033 A).

As can be understood from FIGS. 2 and 3A to 3D, in the case in which production was performed using a raw material oil containing an indene compound (Examples 1 to 9 and 11) and the case in which production was performed using a second raw material oil in which the indene compound was added again to the pitch obtained in step 3 (Examples 10 and 12), the fixed carbon content at the same softening point was improved, and the viscosity at the same softening point was the same or lower as compared to the case of a raw material oil containing no indene compound (the line connecting Comparative Example 1 and Comparative Example 1A). Furthermore, the amount of QI was 0.0% in each case, and pitches having a high fixed carbon content and a low viscosity could be obtained without the QI removal process required for the current impregnating pitch production. When styrene (Comparative Example 2) was used in place of indene, a large amount of sludge was generated and pitch could not be obtained. Furthermore, when dicyclopentadiene (Comparative Example 3) was used in place of indene, the softening point of the pitch increased significantly, and the viscosity increased to an unmeasurable range, and thus, use as a binder pitch or impregnating pitch could not be achieved. The foregoing indicates that the use of an indene compound is important.

**[Table 1]**

| | | Examples | | | | | | | | | | | | Comp | | arative Examples | |
|---|---|---|---|---|---|---|---|---|---|---|---|---|---|---|---|---|---|
| | | 1 | 2 | 3 | 4 | 5 | 6 | 7 | 8 | 9 | 1 10 | 11 | 12 | 1 | 1A | 2 | 3 |
| Raw material oil content (g) | Ethylene bottom oil heavy fraction | 250 | 350 | 450 | 250 | 250 | 250 | 250 | 250 | 250 | - | 250 | - | 500 | 500 | 250 | 250 |
| | Indene | 250 | 150 | 50 | 250 | 250 | - | - | - | - | - | 250 | - | - | - | - | - |
| | 1-Methylindene | - | - | - | - | - | - | - | 250 | - | - | - | - | - | - | - | - |
| | 2-Methylindene | - | - | - | - | - | - | - | - | 250 | - | - | - | - | - | - | - |
| | Styrene | - | - | - | - | - | - | - | - | - | - | - | - | - | - | 250 | - |
| | Dicyclopentadiene | - | - | - | - | - | - | - | - | - | - | - | - | - | - | - | 250 |
| | Distilled cracked kerosene (fraction a) (52% bv mass of indene compound) | - | - | - | - | - | 250 | - | - | - | - | - | - | - | - | - | - |
| | Ethylene bottom oil light fraction (20% by mass of indene compound) | - | | - | - | - | - | 250 | - | - | - | - | - | - | - | - | - |
| Indene compound concentration in raw material oil (mass%) | | 50 | 30 | 10 | 50 | 50 | 26 | 10 | 50 | 50 | - | 50 | - | 0 | 0 | 0 | 0 |
| Second raw material oil content (g) | Indene | - | - | - | - | - | - | - | - | - | 250 | - | 250 | - | - | - | - |
| | Pitch prepared by method described in Ex 1 | - | - | - | - | - | - | - | - | - | 250 | - | 250 | - | - | - | - |
| Heat-treatment conditions | Time (hr) | 4 | 4 | 4 | 16 | 36 | 4 | 4 | 4 | 4 | 4 | 4 | 4 | 4 | 4 | 4 | 4 |
| | Temp (°C) | 380 | 380 | 380 | 380 | 380 | 380 | 380 | 380 | 380 | 380 | 380 | 380 | 380 | 380 | 380 | 380 |
| Distillation conditions | Pressure (PaA) | 933 | 933 | 933 | 933 | 933 | 933 | 933 | 933 | 933 | 933 | 667 | 533 | 933 | 933 | - | 933 |
| | Temp of liquid in still (°C) | 245 | 245 | 245 | 245 | 245 | 245 | 245 | 245 | 245 | 245 | 270 | 272 | 245 | 230 | - | 245 |
| Pitch | Yield (g) | 280 | 285 | 300 | 295 | 310 | 255 | 195 | 275 | 255 | 360 | 265 | 310 | 305 | 325 | - | 385 |
| | Percent yield (%) | 56 | 57 | 60 | 59 | 62 | 51 | 39 | 55 | 51 | 72 | 53 | 62 | 61 | 65 | - | 77 |
| Pitch physical properties | Softening point (°C) | 97.9 | 103.0 | 115.8 | 101.6 | 107.0 | 95.3 | 101.2 | 107.7 | 114.2 | 100.7 | 111.5 | 114.6 | 117.6 | 110.3 | - | >200 |
| | Fixed carbon content (mass%) | 70.5 | 67.8 | 65.0 | 72.8 | 73.7 | 64.4 | 61.8 | 68.2 | 66.3 | 77.0 | 72.3 | 79.6 | 62.3 | 61.1 | - | 49.1 |
| | QI (mass%) | 0.0 | 0.0 | 0.0 | 0.0 | 0.0 | 0.0 | 0.0 | 0.0 | 0.0 | 0.0 | 0.0 | 0.0 | 0.0 | 0.0 | - | 0.0 |
| | Viscosity (mPa-s) (160°C) | 277.7 | 803.3 | 4515.0 | 572.5 | 959.6 | 404.9 | 986.3 | 1352.0 | 3965.0 | 923.2 | 2843.0 | 3299.0 | 6936.0 | 3098.0 | - | Not measurable |
| | Viscosity (mPa·s) (180°C) | 102.3 | 209.3 | 909.2 | 156.8 | 236.3 | 122.8 | 279.6 | 307.4 | 836.5 | 205.7 | 788.3 | 587.4 | 1393.0 | 717.0 | - | Not measurable |
| | Viscosity (mPa-s) (200°C) | 36.6 | 77.1 | 270.3 | 55.3 | 82.8 | 50.8 | 98.6 | 103.1 | 248.4 | 122.3 | 110.3 | 229.9 | 370.2 | 223.1 | - | Not measurable |
| | Viscosity (mPa.s) (220°C) | 16.6 | 35.9 | 104.4 | 26.8 | 37.6 | 25.1 | 45.6 | 44.9 | 98.7 | 27.3 | 26.0 | 44.7 | 140.6 | 95.9 | - | Not measurable |

### (Examples 13 and 14 and Comparative Example 4)

Using the pitches obtained in Examples 11 and 12 and Comparative Example 1A, electrode pieces were produced as samples. The respective pitches and needle coke were mixed at a mass ratio of pitch:needle coke = 2:8, molded into the shape of an electrode piece (50 mmΦ × 40 mm), and calcined at 1000°C to produce an electrode piece. Bulk density was measured using the obtained electrode piece. The bulk density was measured according to JIS R 7222:2017 "Test methods for physical properties of graphite materials." The results are shown in Table 2.

**Table 2**

| | Pitch | Electrode properties |
|---|---|---|
| | | Bulk density (g/cm³) |
| Ex 13 | Pitch described in Ex 11 | 1.524 |
| Ex 14 | Pitch described in Ex 12 | 1.632 |
| Comp Ex 4 | Pitch described in Comp Ex 1A | 1.478 |

As described in Table 2, electrodes produced using a pitch prepared from a raw material oil containing an indene compound (Examples 13 and 14) had a higher bulk density than electrodes produced using a pitch prepared from a raw material oil containing no indene compound (Comparative Example 4), indicating superiority as an electrode.

## Claims

1. A method for producing a pitch, comprising the steps of preparing a raw material oil containing a petroleum-based heavy oil and an indene compound represented by general formula (1) (step 1), heat-treating the raw material oil (step 2), and distilling the heat-treated product to obtain a pitch as a high boiling point component (step 3) 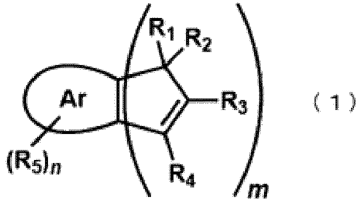 wherein Ar is an aromatic ring having 1 to 3 rings, R₁ to R₄ are each independently a hydrogen atom, a C₁₋₃ alkyl group, or a C₂₋₃ alkenyl group, each R₅ is a C₁₋₃ alkyl group or a C₂₋₃ alkenyl group, m represents an integer of 1 to 3, n represents an integer of 0 to 4 (when a ring number of Ar is 1), an integer of 0 to 6 (when the ring number of Ar is 2), or an integer of 0 to 8 (when the ring number of Ar is 3), adjacent R₅ may be bonded together to form an alicyclic ring, and a hydrogen atom is bonded where Ar is not substituted with R₅.

2. The method for producing a pitch according to claim 1, wherein a concentration of the indene compound in the raw material oil is 10% by mass to 60% by mass.

3. The method for producing a pitch according to claim 1 or 2, wherein the petroleum-based heavy oil is an ethylene bottom oil heavy fraction.

4. The method for producing a pitch according to any one of claims 1 to 3, wherein at least a part of the indene compound is derived from at least one of cracked kerosene and an ethylene bottom oil light fraction.

5. The method for producing a pitch according to any one of claims 1 to 4, wherein Ar in general formula (1) comprises at least one selected from the group consisting of a benzene ring, a naphthalene ring, an anthracene ring, and a phenanthrene ring.

6. The method for producing a pitch according to any one of claims 1 to 5, wherein the ring number of Ar in general formula (1) is 1, R₁ to R₄ are each independently a hydrogen atom or a methyl group, m is 1, and n is 0.

7. The method for producing a pitch according to any one of claims 1 to 6, wherein the indene compound contains at least one selected from the group consisting of indene, methylindene, and dimethylindene.

8. The method for producing a pitch according to any one of claims 1 to 7, wherein a heat-treatment temperature is 360°C to 450°C, and a heat-treatment time is 0.5 to 48 hours.

9. The method for producing a pitch according to any one of claims 1 to 8, further comprising the steps of adding the indene compound again to the pitch obtained in step 3 to prepare a second raw material oil (step 4), heat-treating the second raw material oil (step 5), and distilling the heat-treated product to obtain a pitch as a high boiling point component (step 6).

10. The method for producing a pitch according to claim 9, wherein in step 5, a heat-treatment temperature is 360°C to 450°C, and a heat-treatment time is 0.5 to 48 hours.

11. The method for producing a pitch according to any one of claims 1 to 10, comprising no step of removing quinoline insolubles.

12. A method for producing a carbon material, wherein the pitch obtained by the production method according to any one of claims 1 to 10 is used as a binder pitch.

13. A method for producing a carbon material, wherein the pitch obtained by the production method according to any one of claims 1 to 11 is used as an impregnating pitch.

14. The method for producing a carbon material according to claim 12 or 13, wherein the carbon material is a graphite electrode.
